# EUROPÄISCHE PATENTSCHRIFT

(11) **EP 1 053 157 B1**
(45) Veröffentlichungstag und Bekanntmachung des Hinweises auf die Patenterteilung: **15.01.2003**
(21) Anmeldenummer: 99907494.1
(22) Anmeldetag: 04.02.1999
(51) Int. Cl.: B60T 17/22, B60T 13/66, B60T 8/32

(54) **ELEKTRONISCH REGELBARES BREMSBETÄTIGUNGSSYSTEM**
ELECTRONICALLY CONTROLLABLE BRAKE ACTUATING SYSTEM
SYSTEME D'ACTIONNEMENT DE FREIN REGLABLE ELECTRONIQUEMENT

(30) Priorität: 10.02.1998 DE 19805244
(43) Veröffentlichungstag der Anmeldung: 22.11.2000
(73) Patentinhaber: Continental Teves AG & Co. oHG, 60488 Frankfurt (DE)
(72) Erfinder: BAYER, Ronald, D-63165 Mühlheim (DE); SCHMITTNER, Bernhard, D-63741 Aschaffenburg (DE); ALBRICH VON ALBRICHSFELD, Christian, D-64283 Darmstadt (DE); NEUMANN, Ulrich, D-64380 Rossdorf (DE); KLEIN, Andreas, D-61350 Bad Homburg (DE); JUNGBECKER, Johann, D-55576 Bodenheim (DE); MUTSCHLER, Robert, D-64319 Pfungstadt (DE); FRITZ, Stefan, D-64390 Erzhausen (DE); RÜFFER, Manfred, D-65483 (DE)
(86) Internationale Anmeldenummer: EP9900720
(87) Internationale Veröffentlichungsnummer: WO99041125

(56) Entgegenhaltungen:
- EP-A- 0 157 309
- WO-A-91/17073
- WO-A-97/32766
- DE-A- 19 603 863
- DE-A- 19 603 867
- DE-A- 19 603 909
- JONNER WOLF-DIETER ET AL.: "Electrohydraulic Brake System - The First Approach to Brake-By-Wire Technology " SAE 1996 TRANSACTIONS JOURNAL OF PASSENGER CARS; SAE-PAPER 960991, Bd. 105, Nr. 6, 1996, Seiten 1368-1375, XP002103413 Warrendale PA (USA) in der Anmeldung erwähnt

## Beschreibung

Die Erfindung betrifft ein elektronisch regelbares Bremsbetätigungssystem für Kraftfahrzeuge, mit einem drucklosen Druckmittelvorratsbehälter, mit mindestens einer durch eine elektronische Steuereinheit ansteuerbaren Druckquelle, mit deren Drück Radbremsen des Fahrzeuges beaufschlagbar sind, mit einer Einrichtung zur Erkennung des Fahrerverzögerungswunsches, sowie mit den Radbremsen vorgeschalteten Ventileinrichtungen, die die Radbremsen wahlweise mit der Druckquelle oder dem Druckmittelvorratsbehälter verbinden, wobei eine hydraulische Anordnung vorgesehen ist, die, um im System befindliche Gase . bzw. Luft zu detektieren, ein Beaufschlagen mindestens einer Radbremse mit einem definierten Druckmittelvolumen ermöglicht, wobei ein Drucksensor zum Erfassen des in der Radbremse durch die Wirkung des Druckmittelvolumens hervorgerufenen Druckanstiegs vorgesehen ist.

Ein derartiges Bremsbetätigungssystem ist zum Beispiel aus der DE 196 03 867 A1 bekannt. Bei dem vorbekannten Bremsbetätigungssystem werden zum Zwecke der Gaserkennung den Radbremsen Druckaufbaupulse vorgegebener Länge zugeführt, deren Wirkung ausgewertet wird. Zum Erzeugen der Pulse dient eine hydraulische Pumpe bzw. ein an die Pumpe angeschlossener Hochdruckspeicher.

Es ist daher Aufgabe der vorliegenden Erfindung, alternative Lösungen zur Erzeugung eines definierten Druckanstiegs zum Zwecke des Detektierens von sich im System befindlichen Gasen vorzuschlagen.

Diese Aufgabe wird erfindungsgemäß dadurch gelöst, daß die Anordnung eine Kolben-Zylinder-Einheit umfaßt, die zwischen der Druckquelle und der zugeordneten Radbremse angeordnet ist und daß in einer von der Druckquelle zur Kolben-Zylinder-Einheit führenden Leitung eine Ventileinrichtung geschaltet ist, die ein Absperren der Leitung ermöglicht.

Zwischen der Ventileinrichtung und der Kolben-Zylinder-Einheit ist dabei vorzugsweise eine mit dem Druckmittelvorratsbehälter in Verbindung stehende Leitung angeschlossen, in der eine Drosselstelle eingefügt ist.

Eine zweite Lösung der vorhin erwähnten Aufgabe, bei der die Druckquelle einen hydraulischen Speicher mit einem beweglichen Medientrennelement beinhaltet, sieht vor, daß die hydraulische Anordnung den Speicher umfaßt und daß eine Wegsensoreinrichtung zum Erfassen des Weges des beweglichen Medientrennelements vorgesehen ist, deren Ausgangssignal dem definierten Druckmittelvolumen entspricht.

Bei einer weiteren vorteilhaften Ausgestaltung des Erfindungsgegenstandes ist die Druckquelle in einem mit Druckmittel gefüllten Behälter angeordnet und das Speichergehäuse weist Bohrungen auf, die ein Nachlaufen des Druckmittels in einen im Speichergehäuse vom beweglichen Medientrennelement begrenzten drucklosen Raum ermöglichen.

Um eine Beschädigung des vorhin erwähnten Speichers, dessen Medientrennelement einen unter hohem hydraulischen Druck stehenden, mit Druckmittel gefüllten Raum von einem mit Gas gefüllten Raum trennt, zu erkennen, sieht eine vorteilhafte Weiterbildung der Erfindung vor, daß das Medientrennelement durch eine Metallmembran gebildet ist und daß der im mit Druckmittel gefüllten Raum herrschende Druck signifikant höher als der Gasdruck ist. Der Druckunterschied wird dabei vorzugsweise durch die Vorspannung der Metallmembran oder die zusätzliche Kraft einer auf die Metallmembran einwirkenden Feder hervorgerufen. Durch die erwähnten Maßnahmen wird sichergestellt, daß bei einer Undichtigkeit der Metallmebran ein Medienaustausch nur von der Druckmittel- zur Gasseite stattfindet.

Eine andere Möglichkeit, die Undichtigkeit zu sensieren, besteht bei einer weiteren vorteilhaften Ausgestaltung des Erfindungsgegenstandes darin, daß die Metallmembran doppelwandig ausgeführt ist und daß im Bereich zwischen beiden Wandungen ein Mediensensor angebracht ist, der sowohl auf das Druckmittel als auch auf Gas anspricht.

Die Erfindung wird in der nachfolgenden Beschreibung von zwei Ausführungsbeispielen unter Bezugnahme auf die beiliegende Zeichnung näher erläutert. In der Zeichnung zeigt:
- Fig. 1: ein Schaltbild einer ersten Ausführung des erfindungsgemäßen Bremsbetätigungssystems,
- Fig. 2: ein Schaltbild einer zweiten Ausführung des erfindungsgemäßen Bremssystems, und
- Fig. 3: eine Ausführung einer beim Bremsbetätigungssystem nach Fig. 2 verwendbaren Druckquelle.

Das in der Zeichnung dargestellte, elektronisch regelbare Bremsbetätigungssystem nach der Erfindung besteht aus einem mittels eines Betätigungspedals 1 betätigbaren, zweikreisigen Hauptbremszylinder bzw. Tandemhauptzylinder 2, der mit einem Pedalwegsimulator zusammenwirkt sowie zwei voneinander getrennte Druckräume aufweist, die mit einem drucklosen Druckmittelvorratsbehälter 3 in Verbindung stehen. An den ersten Druckraum (Primärdruckraum) sind mittels einer absperrbaren ersten hydraulischen Leitung 11 beispielsweise eine der Vorderachse zugeordnete Radbremse 7 sowie eine der Hinterachse zugeordnete Radbremse 8 angeschlossen. Das Absperren der Leitung 11 erfolgt mittels eines ersten Trennventils 12, während in dem zur Radbremse 8 führenden Leitungsabschnitt 17 ein elektromagnetisch betätigbares, vorzugsweise stromlos offenes (S0) Druckausgleichsventil 16 eingefügt ist, das bei Bedarf eine radindividuelle Bremsdruckregelung ermöglicht.

Der zweite Druckraum des Hauptbremszylinders 2, an den ein Drucksensor 13 angeschlossen sein kann, ist über eine mittels eines zweiten Trennventils 15 absperrbare zweite hydraulische Leitung 14 mit dem anderen Radbremsenpaar 9, 10 verbindbar. In dem zur Radbremse 10 führenden Leitungsabschnitt 18 ist wieder ein elektromagnetisch betätigbares, vorzugsweise stromlos offenes (S0) Druckausgleichsventil 19 eingefügt. Da der Aufbau des an den zweiten Druckraum des Hauptbremszylinders 2 angeschlossenen hydraulischen Kreises identisch dem des in der vorstehenden Beschreibung erläuterten Bremskreises 11 entspricht, braucht er im nachfolgenden Text nicht mehr erörtert zu werden.

Wie der Zeichnung weiter zu entnehmen ist, ist ein als Fremddruckquelle dienendes Motor-Pumpen-Aggregat 20 mit einem Hochdruckspeicher 21 vorgesehen, das seinerseits aus einer mittels eines Elektromotors 22 angetriebenen Pumpe 23 sowie einem der Pumpe 23 parallel geschalteten Druckbegrenzungsventil 24 besteht. Die Saugseite der Pumpe 23 ist über ein nicht näher bezeichnetes Rückschlagventil an den vorhin erwähnten Druckmittelvorratsbehälter 3 angeschlossen, während der von der Pumpe 23 aufgebrachte hydraulische Druck von einem Drucksensor 25 überwacht wird.

Eine dritte hydraulische Leitung 26 verbindet die Druckseite der Pumpe 23 bzw. den Hochdruckspeicher 21 mit ersten Eingangsanschlüssen von zwei elektromagnetisch betätigbaren 3/3-Wege-Schieberventilen 27, 28, die den Radbremsen 7 und 8 vorgeschaltet sind. An zweiten Eingangsanschlüssen der Schieberventile 27, 28 ist je eine hydraulische Leitung 29, 30 angeschlossen, die andererseits mit dem drucklosen Druckmittelvorratsbehälter 3 in Verbindung steht. In der zum 3/3-Wege-Schieberventil 27, 28 führenden Leitung 26 ist ein erstes Schaltsitzventil 31 eingefügt, das vorzugsweise als stromlos geschlossenes (SG), elektromagnetisch betätigbares 2/2-Wegeventil ausgebildet ist. In der zum Druckmittelvorratsbehälter 3 führenden Leitung 29 bzw. 30 ist ein zweites Schaltsitzventil 32 geschaltet, dessen Aufbau dem des ersten Ventils 31 entspricht. Am Ausgangsanschluß des 3/3-Wege-Schieberventils 27, 28 sind die vorhin erwähnte, zur Radbremse 7 bzw. 8 führende Leitung 11 bzw. 17 sowie je ein Drucksensor 51, 52 angeschlossen, mit dessen Hilfe der in der Radbremse 7, 8 herrschende hydraulische Druck ermittelt wird.

Der gemeinsamen Ansteuerung des Motor-Pumpen-Aggregats 20 sowie der Elektromagnetventile 12,15,16,19,27,28,31,32 dient eine elektronische Steuereinheit 38, der als Eingangssignale die Ausgangssignale eines mit dem Betätigungspedal 1 zusammenwirkenden Betätigungswegsensors 36 sowie des vorhin erwähnten Drucksensors 13 zugeführt werden und die eine Fahrerverzögerungswunscherkennung ermöglichen. Zur Fahrerverzögerungswunscherkennung können jedoch auch andere Mittel, beispielsweise ein die Betätigungskraft am Betätigungspedal 1 sensierender Kraftsensor verwendet werden. Als weitere Eingangsgrößen werden der elektronischen Steuereinheit 38 die Ausgangssignale der Drucksensoren 25, 51 und 52 sowie die der Geschwindigkeit des Fahrzeuges entprechenden Ausgangssignale von lediglich schematisch angedeuteten Radsensoren zugeführt, wobei die den Radbremsen 7,8 zugeordneten Radsensoren mit den Bezugszeichen 53,54 versehen sind.

Um eine Erkennung der sich eventuell im System befindlichen Luft zu ermöglichen ist eine hydraulische Anordnung bzw. eine Kolben-Zylinder-Einheit 33 vorgesehen, die einerseits stromabwärts des Schaltsitzventils 31 an die vorhin erwähnte hydraulische Leitung 26 und andererseits an die zur Radbremse 9 führende Leitung 18 angeschlossen ist. Der Leitungsabschnitt 34 zwischen der Leitung 26 und der Kolben-Zylinder-Einheit 33 ist mittels eines vorzugsweise stromlos geschlossenen (SG) dritten Schaltsitzventils 35 absperrbar. Eine weitere Leitung 36, in der eine Drosselstelle 37 eingefügt ist, ist einerseits an den vom dritten Schaltsitzventil 35 zur Kolben-Zylinder-Einheit 33 führenden Leitungsabschnitt und andererseits an die vom Druckmittelvorratsbehälter 3 zum Motor-Pumpenaggregat 20 führende Leitung angeschlossen.

Durch das Umschalten der Schaltsitzventile 31 und 35 mittels Steuersignale der Steuereinheit 38 wird der näher nicht bezeichnete Kolben der Kolben-Zylinder-Einheit 33 mit dem im Hochdruckspeicher 21 herrschenden Druck beaufschlagt und verschiebt durch seine Bewegung ein definiertes Druckmittelvolumen in die Radbremsen 9, 10. Die an die Radbremsen 9, 10 angeschlossenen Drucksensoren 49,50 ermitteln einen vom Druckmittelvolumen abhängigen Druckwert. Entspricht der ermittelte Druckwert nicht einem vorher festgelegten Volumen-Druck-Zusammenhang, so befindet sich Luft bzw. Gas im System. Dies ist aus Sicherheitsgründen zu signalisieren.

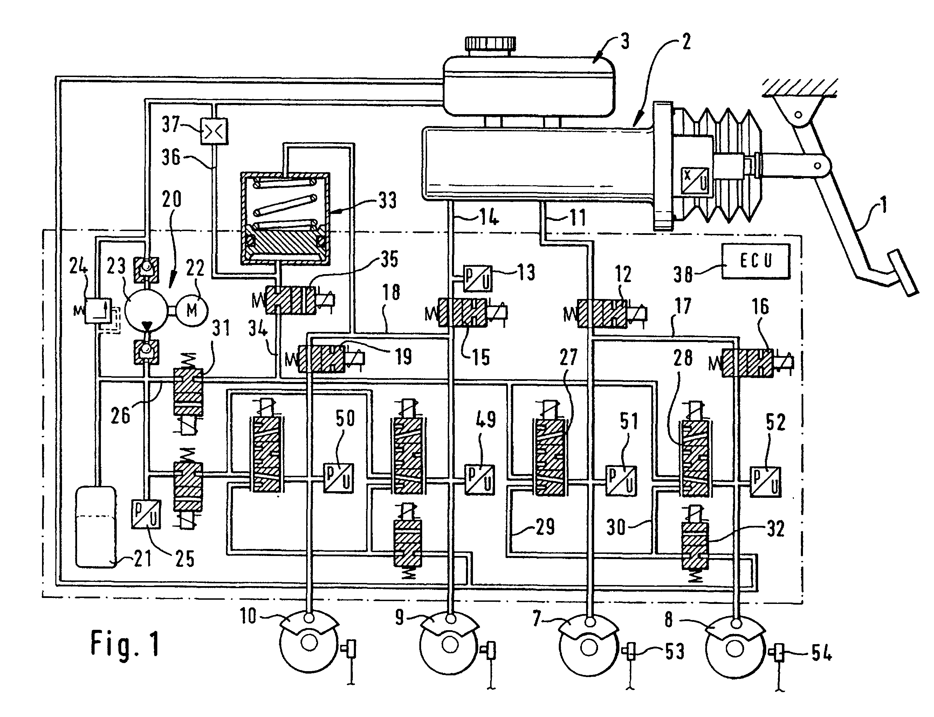

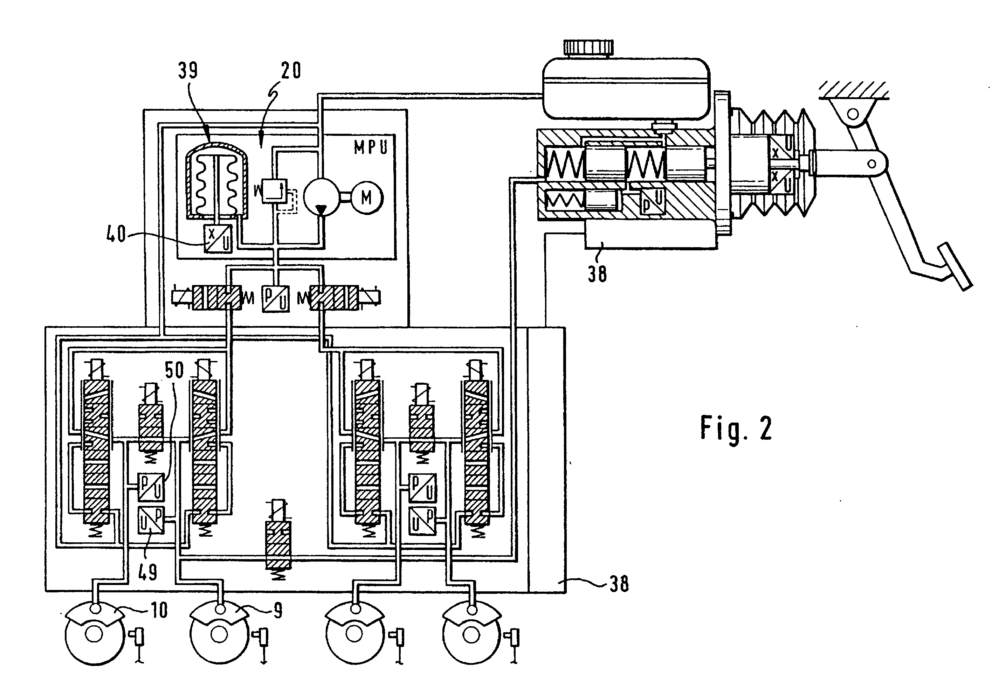

Bei der in Fig. 2 gezeigten zweiten Ausführung dient der Erkennung der sich im System befindlichen Luft eine Wegerkennungseinrichtung, beispielsweise ein Wegsensor 40, der den Betätigungshub bzw. -weg des Medientrennelements des im Zusammenhang mit Fig. 1 erwähnten Hochdruckspeichers sensiert. Das näher nicht bezeichnete Medientrennelement des in Fig. 2 dargestellten Hochdruckspeichers 39 ist dabei durch eine Metallmembran gebildet. Von dem sensierten Metallmembranweg wird das vorhin erwähnte, für den Druckaufbau in den Radbremsen benötigte Druckmittelvolumen abgeleitet. Die Information über das Druckmittelvolumen wird zusammen mit der Information über den in den Radbremsen eingesteuerten hydraulischen Druck für den Vergleich mit der abgespeicherten Volumen-Druck-Charakteristik verwendet.

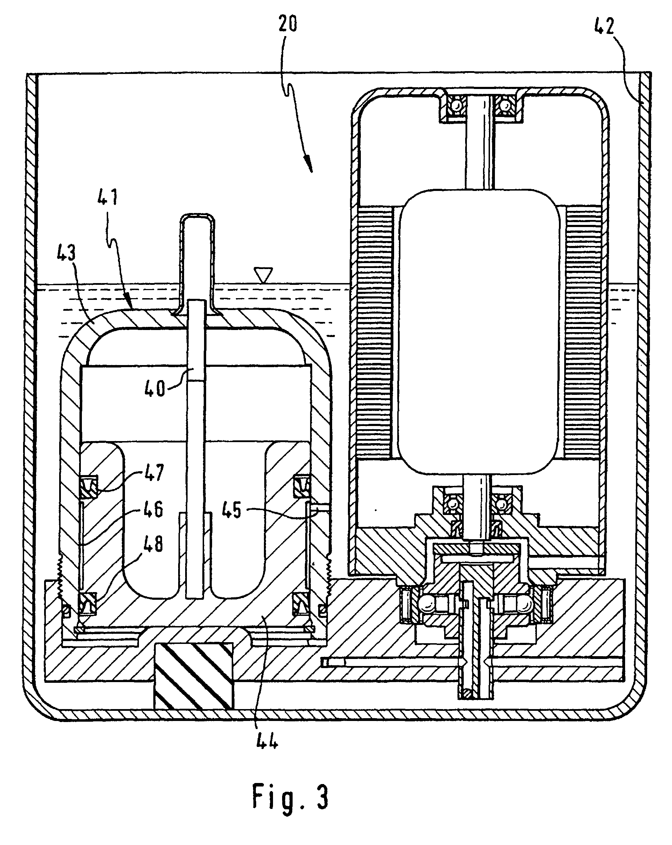

Bei der in Fig. 3 gezeigten Ausführung der vorhin erwähnten Druckquelle 20 ist der hydraulische Hochdruckspeicher als Kolbenspeicher 41 ausgebildet. Die Druckquelle 20 befindet sich dabei vorzugsweise in einem mit Druckmittel gefüllten Behälter 42. Das Gehäuse 43 des Kolbenspeichers 41 ist mit Nachlaufbohrungen 45 versehen, die in einem von am Kolben 44 angeordneten Dichtungen 47, 48 im Gehäuse 43 begrenzten drucklosen Raum 46 münden. Dadurch wird erreicht, daß über die Dichtungen 47, 48 keine Luft ins System gelangen kann. Ein weiterer Vorteil besteht darin, daß die Dichtungen 47, 48 ständig in feuchtem Zustand gehalten werden, wodurch ihre Haltbarkeit erheblich verlängert wird.

## Patentansprüche

1. Elektronisch regelbares Bremsbetätigungssystem für Kraftfahrzeuge, mit einem drucklosen Druckmittelvorratsbehälter (3), mit mindestens einer durch eine elektronische Steuereinheit (38) ansteuerbaren Druckquelle (20), mit deren Druck Radbremsen (7,8,9,10) des Fahrzeuges beaufschlagbar sind, mit einer Einrichtung (13,36) zur Erkennung des Fahrerverzögerungswunsches, sowie mit den Radbremsen (7 - 10) vorgeschalteten Ventileinrichtungen (27,28), die die Radbremsen (7 - 10) wahlweise mit der Druckquelle (20) oder dem Druckmittelvorratsbehälter (3) verbinden, wobei eine hydraulische Anordnung (33) vorgesehen ist, die, um im System befindliche Gase bzw. Luft zu detektieren, ein Beaufschlagen mindestens einer Radbremse (9,10) mit einem definierten Druckmittelvolumen ermöglicht, wobei ein Drucksensor (49,50) zum Erfassen des in der Radbremse (9,10) durch die Wirkung des Druckmittelvolumens hervorgerufenen Druckanstiegs vorgesehen ist, **dadurch gekennzeichnet, daß** die Anordnung eine Kolben-Zylinder-Einheit (33) umfaßt, die zwischen der Druckquelle (20) und der zugeordneten Radbremse (9,10) angeordnet ist und daß in einer von der Druckquelle (20) zur Kolben-Zylinder-Einheit (33) führenden Leitung (34) eine Ventileinrichtung (35) geschaltet ist, die ein Absperren der Leitung (34) ermöglicht.

2. Elektronisch regelbares Bremsbetätigungssystem nach Anspruch 1 **dadurch gekennzeichnet, daß** zwischen der Ventileinrichtung (35) und der Kolben-Zylinder-Einheit (33) eine mit dem Druckmittelvorratsbehälter (3) in Verbindung stehende Leitung (36) angeschlossen ist, in der eine Drosselstelle (37) eingefügt ist.

3. Elektronisch regelbares Bremsbetätigungssystem für Kraftfahrzeuge, mit einem drucklosen Druckmittelvorratsbehälter (3), mit mindestens einer durch eine elektronische Steuereinheit (38) ansteuerbaren Druckquelle (20), die einen hydraulischen Speicher mit einem beweglichen Medientrennelement beinhaltet und mit deren Druck Radbremsen (7,8,9,10) des Fahrzeuges beaufschlagbar sind, mit einer Einrichtung (13,36) zur Erkennung des Fahrerverzögerungswunsches, sowie mit den Radbremsen (7 - 10) vorgeschalteten Ventileinrichtungen (27,28), die die Radbremsen (7 - 10) wahlweise mit der Druckquelle (20) oder dem Druckmittelvorratsbehälter (3) verbinden, wobei eine hydraulische Anordnung (33) vorgesehen ist, die, um im System befindliche Gase bzw. Luft zu detektieren, ein Beaufschlagen mindestens einer Radbremse (9,10) mit einem definierten Druckmittelvolumen ermöglicht, wobei ein Drucksensor (49,50) zum Erfassen des in der Radbremse (9,10) durch die Wirkung des Druckmittelvolumens hervorgerufenen Druckanstiegs vorgesehen ist, **dadurch gekennzeichnet, daß** die hydraulische Anordnung den Speicher (21,39,41) umfaßt und daß eine Wegsensoreinrichtung (40) zum Erfassen des Weges des beweglichen Medientrennelements (-, -, 44) vorgesehen ist, deren Ausgangssignal dem definierten Druckmittel volumen entspricht.

4. Elektronisch regelbares Bremsbetätigungssystem nach Anspruch 3, **dadurch gekennzeichnet, daß** die Druckquelle in einem mit Druckmittel gefüllten Behälter (42) angeordnet ist und daß das Speichergehäuse (43) Bohrungen (45) aufweist, die ein Nachlaufen des Druckmittels in einen im Speichergehäuse (43) vom beweglichen Medientrennelement (44) begrenzten drucklosen Raum (46) ermöglichen.

5. Elektronisch regelbares Bremsbetätigungssystem nach Anspruch 3, wobei das Medientrennelement einen unter hohem hydraulischen Druck stehenden, mit Druckmittel gefüllten Raum von einem mit Gas gefüllten Raum trennt, **dadurch gekennzeichnet, daß** das Medientrennelement durch eine Metallmembran gebildet ist und daß der im mit Druckmittel gefüllten Raum herrschende Druck signifikant höher als der Gasdruck ist.

6. Elektronisch regelbares Bremsbetätigungssystem nach Anspruch 5 **dadurch gekennzeichnet, daß** der Druckunterschied durch die Vorspannung der Metallmembran hervorgerufen wird.

7. Elektronisch regelbares Bremsbetätigungssystem nach Anspruch 5 **dadurch gekennzeichnet, daß** der Druckunterschied durch die zusätzliche Kraft einer auf die Metallmembran einwirkenden Feder hervorgerufen wird.

8. Elektronisch regelbares Bremsbetätigungssystem nach Anspruch 3, wobei das Medientrennelement einen unter hohem hydraulischen Druck stehenden, mit Druckmittel gefüllten Raum von einem mit Gas gefüllten Raum trennt, **dadurch gekennzeichnet, daß** das Medientrennelement durch eine doppelwandig ausgeführte Metallmembran gebildet ist und daß im Bereich zwischen beiden Wandungen ein Mediensensor angebracht ist, der sowohl auf das Druckmittel als auch auf Gas anspricht.

## Claims

1. Electronically controllable brake actuating system for automotive vehicles, including an unpressurized pressure fluid supply reservoir (3), at least one pressure source (20) actuatable by an electronic control unit (38), the pressure of which can be applied to wheel brakes (7,8,9,10) of the vehicle, further including a device (13,36) for detecting the driver's wish for deceleration as well as valve assemblies (27,28) inserted upstream of the wheel brakes (7 - 10) and connecting the wheel brakes (7 - 10) alternatively to the pressure source (20) or the pressure fluid supply reservoir (3), wherein there is provision of a hydraulic arrangement (33) which, for detecting gases or air disposed in the system, permits applying a defined pressure fluid volume to at least one wheel brake (9, 10), with a pressure sensor (49,50) being arranged for sensing the pressure rise which is caused in the wheel brake (9,10) by the effect of the pressure fluid volume,
**characterized in that** the arrangement is configured as a piston-and-cylinder unit (33) which is interposed between the pressure source (20) and the associated wheel brake (9,10), and **in that** a valve assembly (35) is provided in a line (34) that leads from the pressure source (20) to the piston-and-cylinder unit (33) and permits closing of the line (34).

2. Electronically controllable brake actuating system as claimed in claim 1,
**characterized in that** a line (36) communicating with the pressure fluid supply reservoir (3) and accommodating a restrictor (37) is interposed between the valve assembly (35) and the piston-and-cylinder unit (33).

3. Electronically controllable brake actuating system for automotive vehicles, including an unpressurized pressure fluid supply reservoir (3), at least one pressure source (20) actuatable by an electronic control unit (38), which pressure source comprises a hydraulic accumulator with a movable media separating element and the pressure of which can be applied to wheel brakes (7,8,9,10) of the vehicle, further including a device (13,36) for detecting the driver's wish for deceleration as well as valve assemblies (27,28) inserted upstream of the wheel brakes (7 - 10) and connecting the wheel brakes (7 - 10) alternatively to the pressure source (20) or the pressure fluid supply reservoir (3), wherein there is provision of a hydraulic arrangement (33) which, for detecting gases or air disposed in the system, permits applying a defined pressure fluid volume to at least one wheel brake (9, 10), with a pressure sensor (49,50) being arranged for sensing the pressure rise which is caused in the wheel brake (9,10) by the effect of the pressure fluid volume,
**characterized in that** the hydraulic arrangement is provided by the accumulator (21,39,41), and **in that** there is provision of a travel sensor device (40) for sensing the travel of the movable media separating element (-,-,44), the output signal of which corresponds to the defined pressure fluid volume.

4. Electronically controllable brake actuating system as claimed in claim 3,
**characterized in that** the pressure source is arranged in a reservoir (42) filled with pressure fluid, and **in that** the accumulator housing (43) has bores (45) which permit the delivery of the pressure fluid into an unpressurized chamber (46) that' is defined in the accumulator housing (43) by the movable media separating element (44).

5. Electronically controllable brake actuating system as claimed in claim 3, wherein the media separating element separates a chamber filled with pressure fluid and subjected to high hydraulic pressure from a chamber filled with gas,
**characterized in that** the media separating element is configured as a metal diaphragm, and **in that** the pressure that prevails in the chamber filled with pressure fluid is significantly higher than the gas pressure.

6. Electronically controllable brake actuating system as claimed in claim 5,
**characterized in that** the difference in pressure is caused by the preload of the metal diaphragm.

7. Electronically controllable brake actuating system as claimed in claim 5,
**characterized in that** the difference in pressure is caused by the additional force of a spring which acts upon the metal diaphragm.

8. Electronically controllable brake actuating system as claimed in claim 3, wherein the media separating element separates a chamber filled with pressure fluid and subjected to a high hydraulic pressure from a chamber filled with gas,
**characterized in that** the media separating element is configured as a double-wall metal diaphragm, and **in that** a media sensor is fitted in the area between the two walls which responds to pressure fluid and to gas.

## Revendications

1. Système d'actionnement de frein à régulation électronique pour véhicule automobile, comportant un réservoir de fluide sous pression (3) hors pression, comportant au moins une source de pression (20) qui peut être commandée par une unité électronique de commande (38) et dont la pression alimente des freins de roues (7, 8, 9, 10) du véhicule, comportant un dispositif (13, 36) pour reconnaître la volonté de ralentir du conducteur, ainsi que des dispositifs à soupape (27, 28), montés en amont des freins de roues (7-10), qui relient les freins de roues (7-10) au choix à la source de pression (20) ou au réservoir de fluide sous pression (3), un dispositif hydraulique (33) qui, pour détecter des gaz ou de l'air se trouvant dans le système, permet de solliciter au moins un frein de roue (9, 10) avec un volume de fluide sous pression défini, étant prévu, un capteur de pression (49, 50) étant prévu pour détecter la montée en pression provoquée dans le frein de roue (9, 10) par l'action du volume du fluide sous pression, **caractérisé en ce que** le dispositif comprend une unité à cylindre et piston (33) qui est disposée entre la source de pression (20) et le frein de roue (9, 10) associé et **en ce que** dans une conduite (34), menant de la source de pression (20) à l'unité à cylindre et piston (33), est monté un dispositif à soupape (35) qui permet de fermer la conduite (34).

2. Système d'actionnement de frein à régulation électronique selon la revendication 1, **caractérisé en ce qu'**une conduite (36), reliée au réservoir de fluide sous pression (3) et dans laquelle est inséré un point d'étranglement (37), est raccordée entre le dispositif à soupape (35) et l'unité à cylindre et piston (33).

3. Système d'actionnement de frein à régulation électronique pour véhicule automobile, comportant un réservoir de fluide sous pression (3) hors pression, comportant au moins une source de pression (20) qui peut être commandée par une unité électronique de commande (38) et qui contient un accumulateur hydraulique avec un élément mobile de séparation des fluides et dont la pression peut alimenter des freins de roues (7, 8, 9, 10) du véhicule, comportant un dispositif (13, 36) pour reconnaître la volonté de ralentir du conducteur, ainsi que des dispositifs à soupape (27, 28), montés en amont des freins des roues (7-10), qui relient les freins des roues (7-10) au choix à la source de pression (20) ou au réservoir de fluide sous pression (3), un dispositif hydraulique (33) qui, pour détecter des gaz ou de l'air se trouvant dans le système, permet de solliciter au moins un frein de roue (9, 10) avec un volume de fluide sous pression défini, étant prévu, un capteur de pression (49, 50) étant prévu pour détecter la montée en pression provoquée dans le frein de roue (9, 10) par l'action du volume de fluide sous pression, **caractérisé en ce que** le dispositif hydraulique comprend l'accumulateur (21, 39, 41) et **en ce qu'**un dispositif à capteur de distance (40) est prévu pour détecter la course de l'élément mobile de séparation des fluides (-,-,44) dont le signal de sortie correspond au volume de fluide sous pression défini.

4. Système d'actionnement de frein à régulation électronique selon la revendication 3, **caractérisé en ce que** la source de pression est disposée dans un récipient (42) rempli de fluide sous pression et **en ce que** le carter de l'accumulateur (43) présente des perçages (45) qui permettent au fluide sous pression de s'écouler dans une chambre (46) hors pression, limitée dans le carter de l'accumulateur (43) par l'élément mobile de séparation des fluides (44).

5. Système d'actionnement de frein à régulation électronique selon la revendication 3, dans lequel l'élément de séparation des fluides sépare une chambre sous haute pression hydraulique, remplie de fluide sous pression d'une chambre remplie de gaz, **caractérisé en ce que** l'élément de séparation des fluides est formé par une membrane métallique et **en ce que** la pression qui règne dans la chambre remplie de fluide sous pression est plus élevée dans une mesure significative que la pression du gaz.

6. Système d'actionnement de frein à régulation électronique selon la revendication 5, **caractérisé en ce que** la différence de pression est provoquée par la précontrainte de la membrane métallique.

7. Système d'actionnement de frein à régulation électronique selon la revendication 5, **caractérisé en ce que** la différence de pression est provoquée par la force supplémentaire d'un ressort agissant sur la membrane métallique.

8. Système d'actionnement de frein à régulation électronique selon la revendication 3, dans lequel l'élément de séparation des fluides sépare une chambre remplie de fluide sous pression, sous haute pression hydraulique, d'une chambre remplie de gaz, **caractérisé en ce que** l'élément de séparation des fluides est formé par une membrane métallique à double paroi et **en ce que** dans la zone comprise entre les deux parois est placé un capteur de fluide qui réagit aussi bien aux fluides sous pression qu'aux gaz.
